# EUROPEAN PATENT APPLICATION

(11) **EP 4 414 262 A1**
(43) Date of publication of application: **14.08.2024**
(21) Application number: 22878015.1
(22) Date of filing: 03.10.2022
(51) Int. Cl.: B64C 39/00, B64C 15/12

(54) **MANNED LENTICULAR AERODYNE**

(30) Priority: 05.10.2021 ES 202100101
(71) Applicant: Bernedo Toran, Manuel, 28760 Madrid (ES)
(72) Inventor: Bernedo Toran, Manuel, 28760 Madrid (ES)
(74) Representative: Ungria López, Javier
(86) International application number: PCT/ES2022/070625
(87) International publication number: WO 2023/057672

(57) **Abstract**

The invention provides aerodynamic lift, or downward thrust for the amphibious environment, by means of two conical frames that are opposed at the bases and counter-rotating, thus cancelling out the opposing torque moment when rotating, being provided with concentric rows of fixed and retractable blades having variable angle of attack, arranged along the generatrix, separated by the fixed central area of the frame, where the power plant and the electro-mechanical elements that enable its operation are located, the cabins being situated in the conoidal hollow space of both, thus forming a body of lenticular geometry. The invention is provided with an electro-aerodynamic stabilisation system (2 and 4) and landing gear (T), propulsion and manoeuvring (19) being provided by pressurised air supplied through variable-area nozzles, and by the thrust due to the tilting of its axis (Y), with a fairing. Its functions and performance are similar to those of a helicopter.

## Description

In light of the above and based on the concepts expressed in the abstract, it must be considered that the invention to which this specification refers constitutes an industrial novelty with characteristics and advantages that make it worthy of the privilege of exploitation, therefore it is requested to be framed within the "VTOL" (Vertical Take-Off and Landing) sector.

The present invention, as expressed in the specification, consists of: "manned lenticular aerodyne".

In the prior art, manned aerodynes with lenticular shape are known, among which those disclosed in patent documents GB 807169 and US 3599902 should be mentioned.

The aircraft described in document GB 807169 is intended to provide aerodynamic lift through the counter-rotation of two cones that are opposed at their bases, which comprise concentric rows of fixed extended blades, having adjustable angle of attack to regulate the lift of the aerodyne. The fixed blades are arranged in two rows very close together and in parallel, with many blades and very little separation distance between them, which has the drawback that they generate vortices that negatively influence the aerodynamic physics of the aircraft, reducing its aerodynamic efficiency.

Furthermore, the aircraft of document GB 807169 comprises six engines that transmit their power directly to the periphery of discs through gears, which considerably complicates the aircraft.

The aircraft in document GB 807169 has flaps and rudders to apply the aerodynamic brake and steering control, whose operation is not optimal.

Also worth mentioning is document US 3599902, which describes an aircraft having a fuselage of generally saucer-like character comprising upper and lower disc components separated by a transverse space in which it comprises extending wings, which have the drawback that they do not provide sufficient lift force for a correct take-off and are also unable to move with two degrees of freedom and regulate their angle of attack as they are extended by the centrifugal force.

Furthermore, in this document two turbo-shaft engines are used to rotate some discs and another engine in the base for thrust, which complicates the aircraft, resulting in a higher cost.

The invention solves all of the above problems, for which purpose it includes a series of devices intended to provide aerodynamic lift, or alternatively, downward thrust, due to two conical frames, a first frame and a second frame that are opposed at the bases and counter-rotating that are coaxially anchored to a central mast of a crosshead-shaped frame, both together forming a lenticular geometric body, which are provided along their generatrix with concentric rows of fixed blades adjustable in their angle of attack in the first frame and self-adjusting retractable blades in the second frame, also adjustable in their angle of attack, both frames being powered by two engines in the central area that move their respective separate and opposite axles, thus counteracting the angular momentum created by the two rotations.

Manoeuvrability is achieved by four air nozzles adjustable in flow and position, fed by the pressure created in a circular concentric manifold-compressor through blades provided on the rotating base of the frames and with their respective control devices in the cabin, thus allowing the operation in all angles and directions desired to control the device; both vertical and lateral stability is controlled by an I.M.U. (Inertial Measurement Unit) that actuates the controls required therefor.

The spaces and cabin are located in the conoidal hollow space of both frames and are fixed to the mast of the frame and are accessible either through the central part of the device or through the base side of the lower frame.

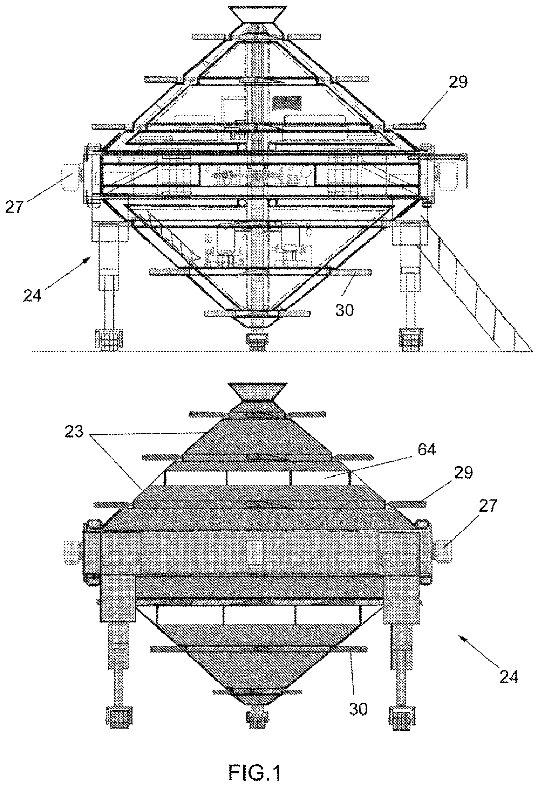

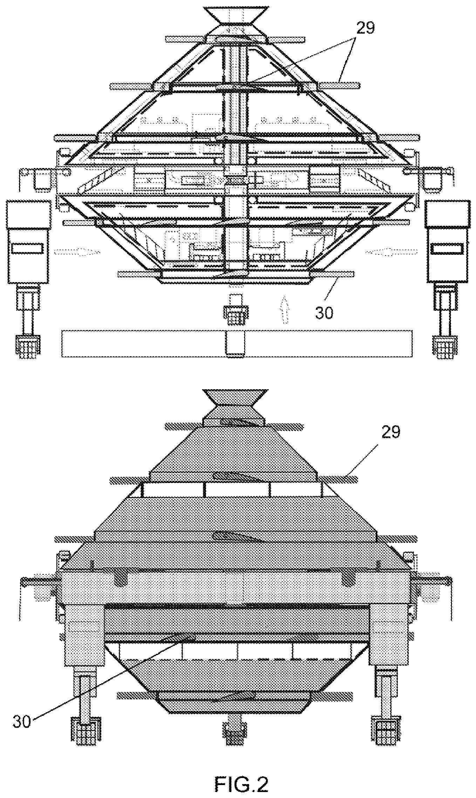

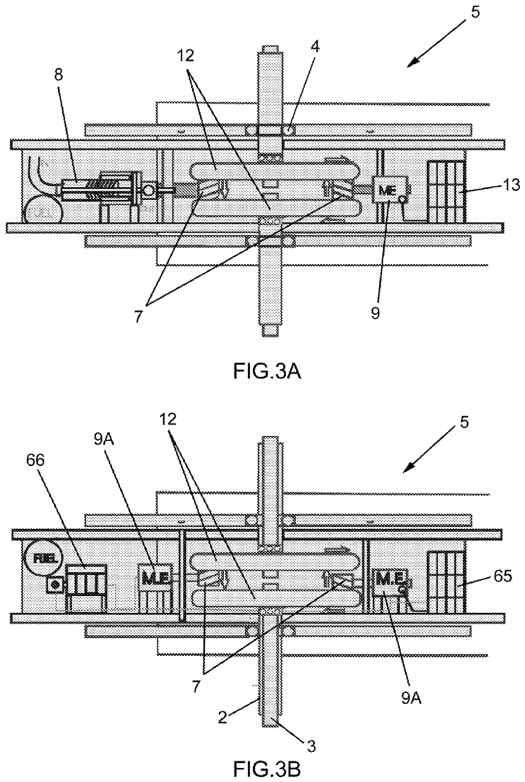

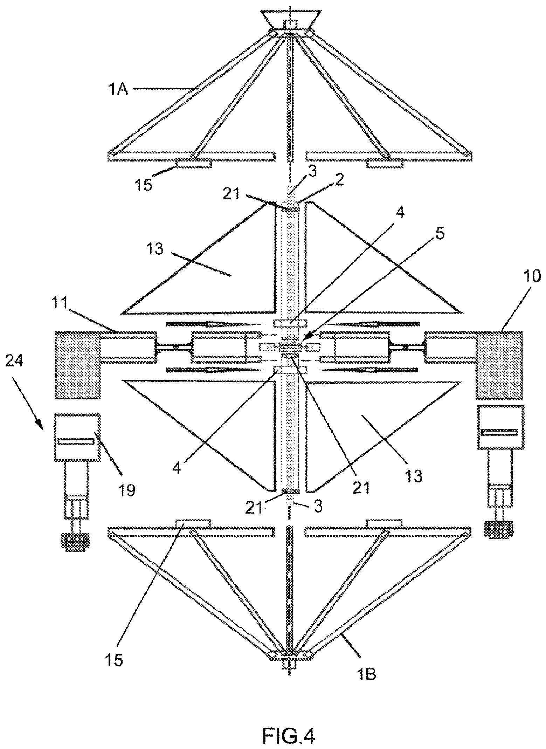

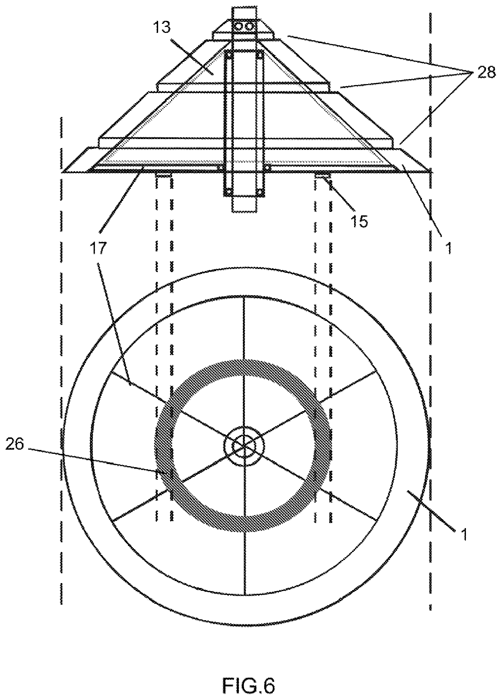

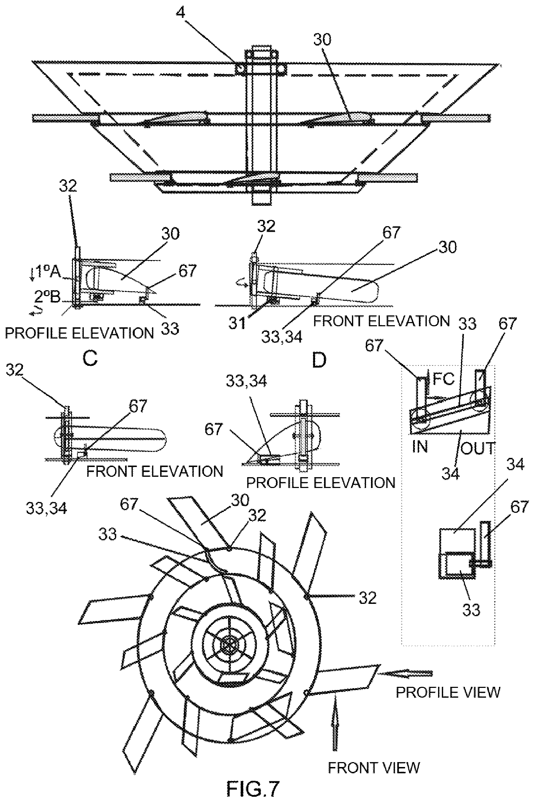

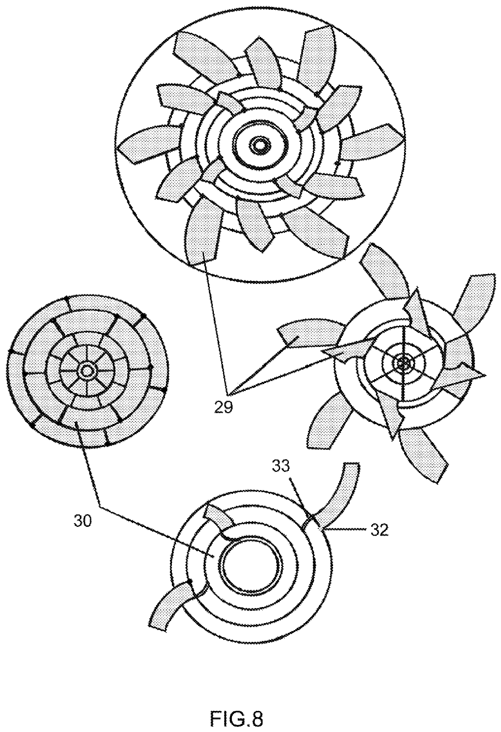

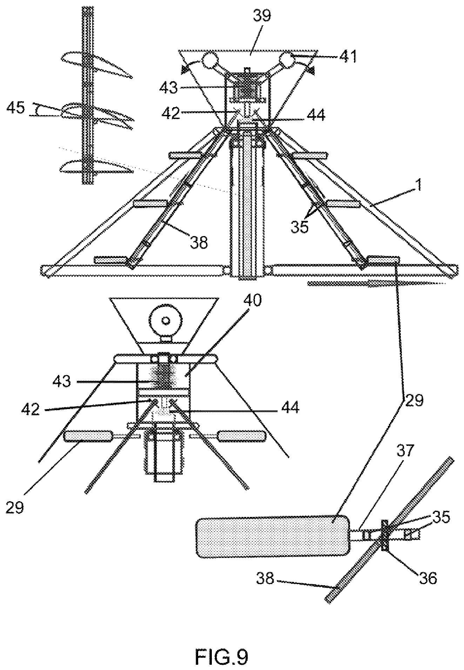

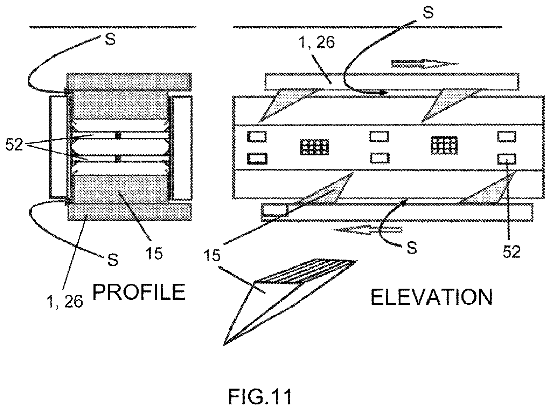

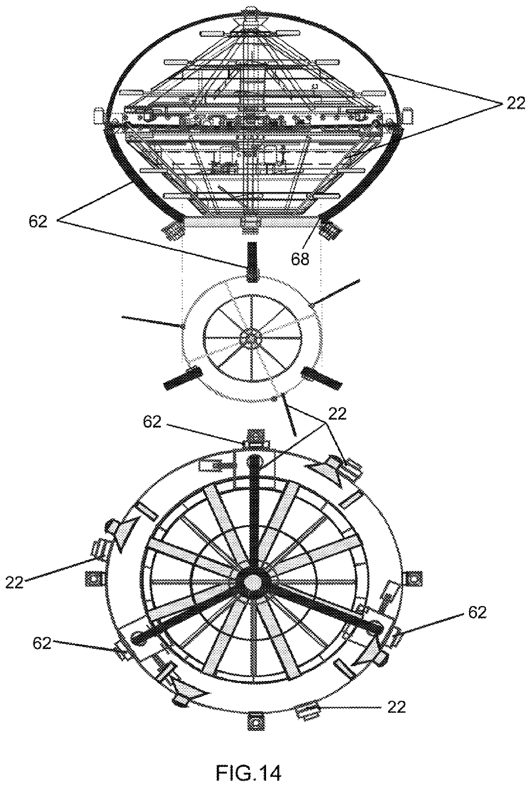

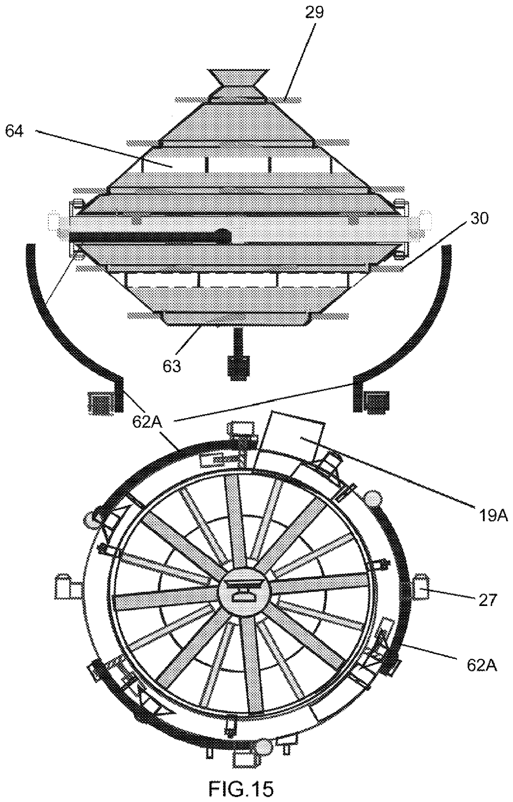

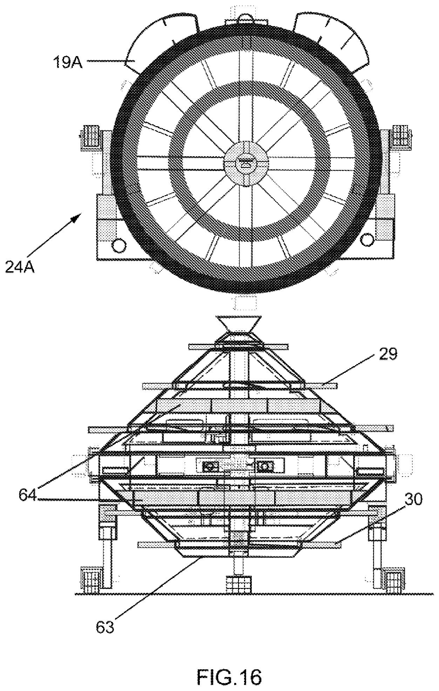

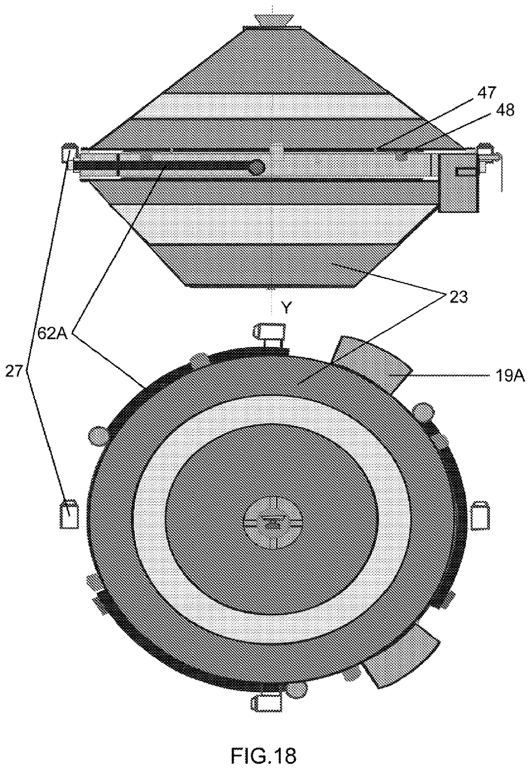

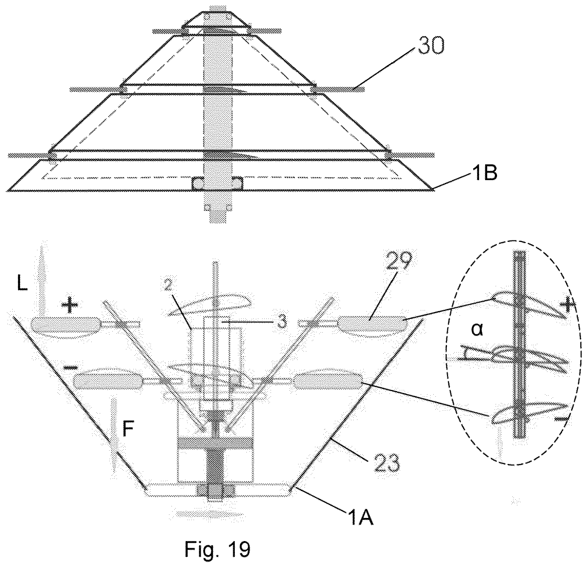

In a first embodiment of the invention, the first frame of the aerodyne is arranged above the second frame. In said particular embodiment of the invention, shown in Figures 1 to 18 below, the concentric rows of blades define a lift system. These rows are arranged along the generatrix of the cone that do not interfere with each other since they have different diameters and a small length, highlighting the constructive and simple advantage compared to the complexity and lengths of helicopter rotors and of document GB 807169, largely lacking the physical and aerodynamic efforts to which they are subjected, in this case the rotating system being much safer as it is covered by an external fairing arranged on the conical frames, protecting it from any impact as well as accidents with personnel; and can meet the requirements of any helicopter being appropriate for the same functions, having the advantages of its simplicity, lower manufacturing and maintenance costs. To help better understand this specification and as an integral part thereof, a series of plans is attached in whose figures the following is depicted in an illustrative and non-limiting manner:
However, the present invention also comprises a second alternative embodiment (shown in Figure 19), in which the first frame is arranged below the second frame. This embodiment allows the use of the aerodyne in amphibious mode, since by exchanging the position of the frames (and therefore, their respective blades), it is possible to regulate the angle of attack of said blades in the first frame until it is fixed at a negative value by an adjuster. As a consequence, the rotation of the concentric rows of blades generates, in this case, a downward thrust that would make it possible to immerse the aerodyne (amphibious mode).
Figure 1.- Elevation view of a long model of the device with and without transparency.
Figure 2.- Elevation view of a short model with and without transparency.
Figure 3A.- Power plant with linked engines, showing the transmission with its primary and secondary gears and independent rotation axes.
Figure 3B.- Power plant with independent engines, showing the transmission with its primary and secondary gears and independent rotation axes.
Figure 4.- Set of separated main elements.
Figure 5.- Set of main elements joined in plan and elevation, where the plan only shows the arrangement of the pressure manifold, accumulator and power plant.
Figure 6.- Set of main elements of the frames and their bases.
Figure 7.- Retractable blades, their mounting on the frame, different positions, extended and retracted, in elevation, clamping guide and deployed on the frame.
Figure 8.- Different shapes of blades retracted and deployed on the frame.
Figure 9.- Fixed blades, automatic and centrifugal adjuster of angle of attack of blade as well as the actuation of the centrifugal masses in the extended position.
Figure 10.- Adjustable nozzle mechanism for manoeuvring axles in all directions with its drive motors, pressure manifold and accumulators, rotation stabilising fins.
Figure 11.- Elevation and profile of the air manifold-compressor with its blades incorporated into the base of the frames and connection with accumulators.
Figure 12.- Directional drive controls and pedals, for tilt, acceleration, level flight and 360° rotation manoeuvres.
Figure 13.- Electro-mechanical and aerodynamic mechanisms for stabilising the vertical "Y" axis in tilt and frame rotation, central I.M.U. and drive motors.
Figure 14.- Short version with braces of reinforcing support mast (RSM) if necessary, and with arched landing gear anchored to the base, plan and elevation view.
Figure 15.- Short version with arched landing gear.
Figure 16.- Short version with conventional folding landing gear.
Figure 17 and 18.- Short version with fairing of reinforcing support mast (RSM). Air circulation circuit and adaptation of the landing gear type.
Figure 19.- schematically represents an embodiment of the aerodyne of the present invention in amphibious mode, in which the first frame is arranged below the second frame.
Figure 20 represents a blade of the embodiment of Fig. 19 in contact with water. Referring to the numbering indicated in the aforementioned figures, it can be seen that the "MANNED LENTICULAR AERODYNE" that the invention proposes is made up of the following components:
   A). Taking Figure (1) as a first impression, we can begin with the exploded view of Figure (4) in which we see a central mast 2, which coaxially contains two drive axles 3, which rotate in counter-rotation, as described later. This mast merges with two frames 10 and 11, forming a central crosshead to which cabin hoods 13 are attached internally, and on these two rotary conical frames 1 are arranged, an upper one 1A and a lower one 1B that face each other at their bases. Said crosshead houses in its centre a power plant 5, Figure (3), formed by two engines in parallel (Figure 3A), a main turbo-shaft type engine 8, and another electric type auxiliary engine 9 in standby mode (STBY) that rotates in idle state and can assist the main engine in case of failure, moving the axles 3 in counter-rotation by means of helical gears 7 and 12; The use of two simultaneous engines 9A, of an electric type (Figure 3B), can also be considered to move the axles simultaneously and control their speed independently, powered by an engine-generator 66, or by batteries 65.
   B). Continuing with Figure (4), we see how the frames 1A and 1B are coupled to the drive axles 3, at one end and at the other end they are coupled in bearings, external 4 to the mast. It also comprises internal bearings 21, in the mast that hold the drive axles 3 and allow their rotation inside the mast 2.

The incorporation of a reinforcing support mast (RSM) has been intended, which is achieved with three possible embodiments; a) with three rollers 18, Figure (5); b) with reinforcing braces 22, Figure (14); and c) with external conical fairing 23, Figure (17).

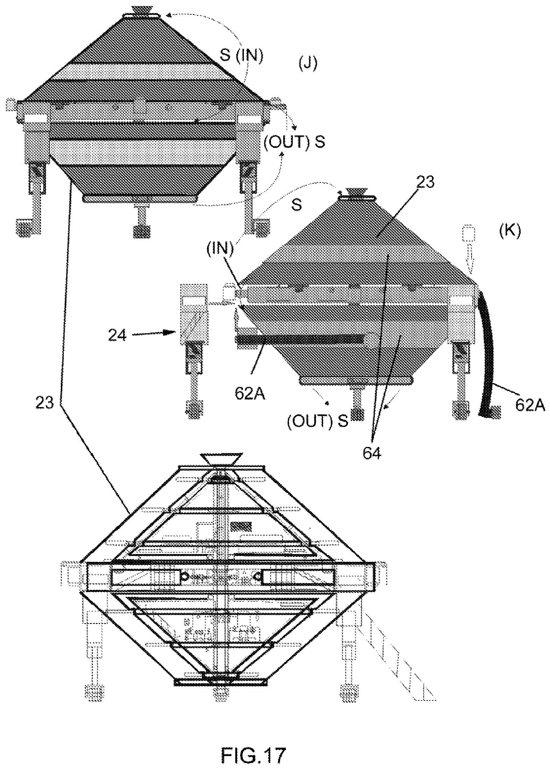

Access from the outside is through doors 19, Figure (4), which are provided in a landing gear support 24, and from the inside the spaces are in communication through hatches 20, Figure (5); communication that can only be done on the ground and at rest. In this way, the basic appearance of the device is configured when adding the landing gear 24, with its legs arranged at 120° (Figure 17).

More details can be seen in Figure (5), a circular and concentric pressure manifold 16 of a compressor with an accumulator 25. In Figure (6), a support 26 of the compressor blades 15 that go on the manifold 16. This support 26 with the blades 15 is attached to the circular bases of the frames 1 Figure (11), whose rotation compresses the air absorbed from an inlet (S), which is maintained in the accumulator 25, which remains recharged, supplying instantaneous pressure to a system at high demand, to feed nozzles 27, as described later

C). The conical frames 1, Figure (6), have radii 17 at their base, and comprise three or more grooves 28, where fixed blades 29 are anchored in the upper frame 1A, Figure (9), and retractable blades 30 in the lower frame 1B, Figure (7), both are automatically regulated to vary their angle of attack depending on the rotation speed of the frames.

In Figure (7), the retractable blades 30 have been represented, with positions (D) retracted and (C) extended, which vary the angle of attack as they extend to a point from which and at maximum rotation speed they end with their minimum angle of attack (position (C)), regulated by a spring 31, which yields to the centrifugal force FC, on a fixed support 32; and tilting about 2 degrees of freedom, rotating about the axis (A) and about the axis (B); said retractable blades 30 are supported by a rod (67) that runs through a guide 33, with a ramp 34, which is what produces the variation when extended; In Figure (8), the different shapes, both extended and retracted, can be seen.

The fixed blades 29, Figure (9), are anchored to the frame, by two points 35, between which a helical gear 36, attached to the shaft 37 of the fixed blade 29, is driven by a plate 38, which in turn is moved by a centrifugal blade angle adjuster 39, or an electric blade angle adjuster 40, the first being regulated by the movement of centrifugal masses 41, which pull a plate collector 42, returning to its initial position by a spring 43; This action can be blocked with an electromagnet 44, to establish the angle of attack 45. The electric adjuster 40 does the same but moved by the electromagnet 44, which is controlled by the I.M.U. 46, Figure (13).

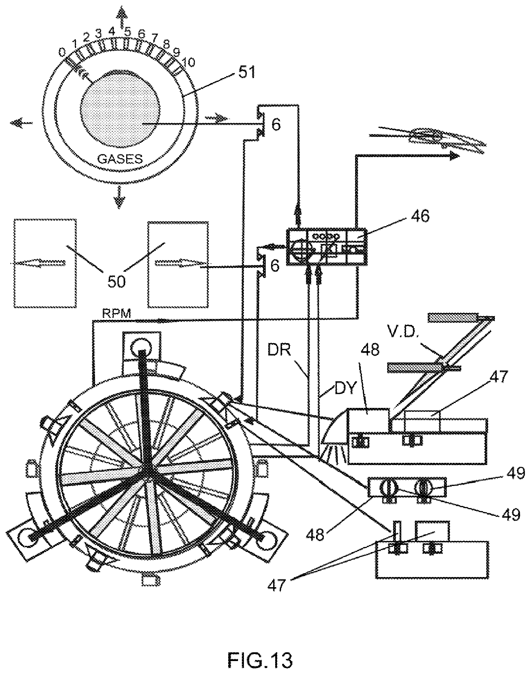

D). The instability of the circular rotation (DR) of the frame that may exist due to the difference in opposing torque of the frames 1A and 1B, Figure (13), as well as its possible lateral oscillations (DY) due to the opposing torque of the engines 8, 9, 9A, are controlled electronically with the I.M.U. 46 of Figure (13), acting on regulating fins 47, (represented in profile and elevation in Figure 13) in the case of instability (DR); and on stabilising diffusers 48 of the vertical axis, in the case of lateral oscillations (DY). Both the fins 47 and the diffusers 48 are aerodynamically fed by the downward air stream V.D. produced by the fixed blades 29; the fins 47 moving in the opposite direction to the movement of the frame, and the diffusers supplied by the air jet controlled by a butterfly valve 49 (represented in Figure 13 in an open and a half-open position). The fins are incompatible with the use of pedals 50, and the diffusers with the use of a tilt controller 51, being disconnected by relays 6.

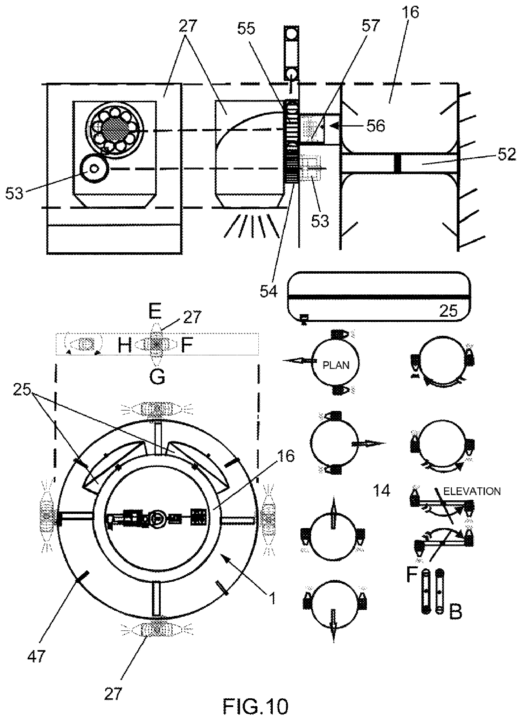

E). Directional operation is achieved with the four adjustable nozzles 27, Figure (10), in direction and intensity, fed by air from the pressure manifold 16; and which rotate 360° in stages of 90° (E,F,G,H), expelling the pressurised air in the direction necessary for the manoeuvre, they are located every 90° on the periphery of the device, creating the momentum necessary to move in any direction as represented in the sequence 14 of Figure 10. The manifold 16 is supported by structural joists 52 Figures (10 and 11).

F). The nozzles 27, Figure (10), are actuated by a stepper motor 53, which actuates a driving gear 54 moving a driven gear 55, attached to the nozzle. The air inlet 56, through the interior of a nozzle bearing, is achieved by opening a butterfly valve 57, which is powered by the tilt controller 51 and by a level flight controller 58, which are located in the control cabin, Figure (12), both actions of rotation of the nozzles and opening the butterfly valve are carried out simultaneously.

G). The controllers 51 and 58 for operation in the cabin, Figure (12), are determined by conventional joysticks, where the tilt controller 51 is the type that has and moves gases at the base, its objective being to accelerate at the same time as it tilts, while the controller 58 is only for level flight. The tilt manoeuvre is performed to transform lift into traction, by tilting the vertical axis by about 6°; Flight/ground mode 59 has the functions of: (Flight).- all operational, (Ground).-limits the RPM and cancels the tilting. The operation of both controllers 51 and 58 cannot be simultaneous. The pedals 50 rotate the frame 360°, LT to the left and LR to the right, keeping the frames rotating; the brakes also act on the upper tip, as is known in the prior art.

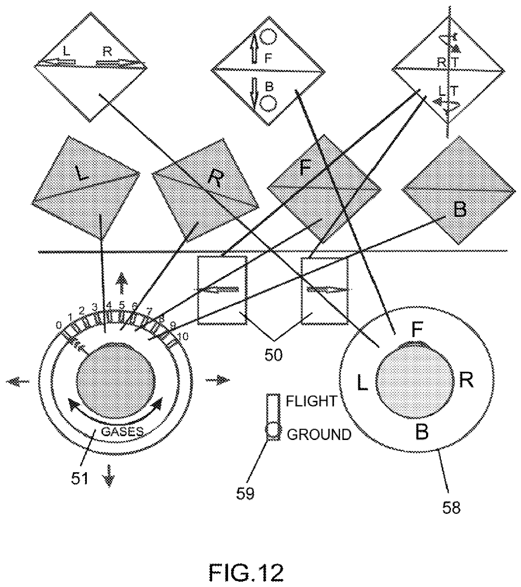

In Figure 12, L represents the left movement, R the right movement, F the forward movement, B the backward movement; RT right turn and LT left turn, which are directed using controllers 51 and 58, which, as noted, cannot be operated simultaneously.

H). Figure (14) shows a version with reinforcing support mast (RSM), established by the reinforcing braces 22, alternative to the rollers 18 of Figure (5), or the fairing 23, shown in the Figures (17) and (18) (among others), to avoid transversal movements of the mast 2. By having these braces 22, arched landing gear 62 can be anchored 68 to the lower frame held by said braces 22. Figure (15) shows a version with retractable blades 30, and retractable arched landing gear 62A, which is retracted in the periphery, thus reducing the resistance to advance and improving the aesthetics of the device. In this type of version the entrance is through the lower part 63, or through doors 19A. In Figure (16) another version with conventional folding landing gear 24A, and retractable blades 30.

In Figures (17 and 18), the reinforcing support mast (RSM) is conical in shape and makes up the outer fairing 23 that covers the entire device with a circular visor 64 of transparent material at the same height but wider than that of the frame and that provides 360° vision when the frame rotates actuated by the pedals, ultimately giving it the appearance of a lenticular figure.

Figure (17) shows two possible air circulations S (J) and (K), showing in (K) and due to its design, the two possible ways of coupling the described landing gear, one fixed landing gear 24, and another with a retractable arched landing gear 62A.

Figure 19 schematically represents an embodiment of the aerodyne of the present invention in amphibious mode, in which the first frame (1B) is arranged below the second frame (1A). Consequently, the rows of blades provided on said frames are also inverted, with respect to the other embodiments of the present invention, shown in Figures 1 to 18 and it is possible to regulate the angle of attack of said blades in the first frame until fixed at a negative value by means of the adjuster.

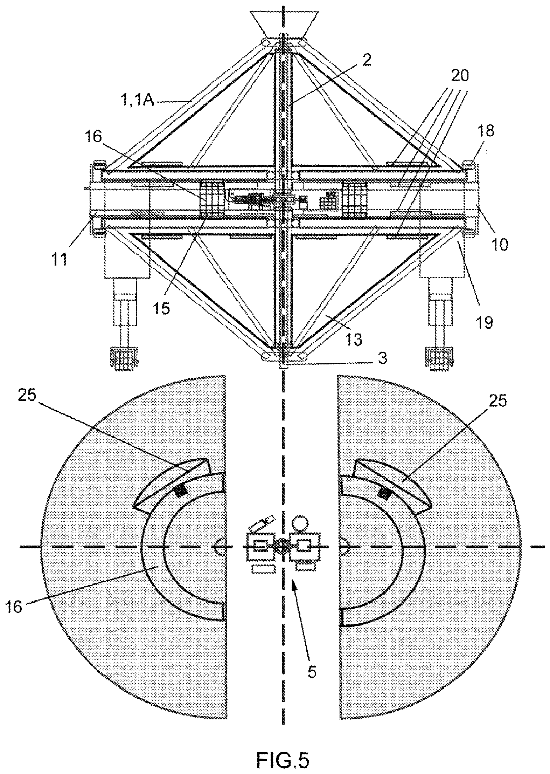

In this particular embodiment of the present invention, the accumulators 25 (visible in Fig. 5) are preferably used as ballasts, when filled with water, facilitating immersion. Likewise, a progressive exchange of fluids, air for water, takes place as the aerodyne is submerged in the liquid. By changing the angle of the blades to positive, the aerodyne gradually emerges and the reverse exchange of fluids (water for air) occurs.

In the detail of Fig. 19 marked in dashed line is shown schematically how, if the angle of attack (α) of the blades is positive (+), the aerodyne experiences an upward lift force (indicated by the reference L and an ascending arrow) and if, on the other hand, the angle of attack (α) is negative (-), the aerodyne then experiences a downward thrust, indicated by the reference F and a downward arrow.

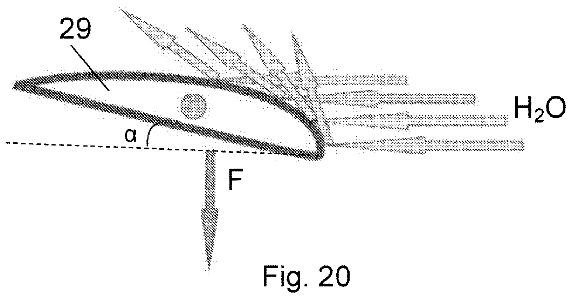

Lastly, in Figure 20 it is shown schematically how a blade of the aerodyne of Fig. 19, when subjected to a current of water (H₂O), experiences a downward thrust (F).

## Claims

1. A MANNED LENTICULAR AERODYNE, comprising:
a) a series of devices that as a whole are intended to provide aerodynamic lift, or alternatively, downward thrust, by the counter-rotation of a first frame and a second frame that are conical and opposed at their bases, and with their drive axles anchored coaxially to a mast of a crosshead-shaped frame, said frames comprising concentric rows of blades arranged along the generatrix, fixed and retractable, both adjustable in their angle of attack, thus forming a lenticular geometric body in the centre of which is housed a power plant with two independent transmission axles for each frame, comprising cabins fitted to the mast in the hollow spaces of the frames, symmetrically forming two cabins,
b) where the entire assembly is displaced by aerodynamic lift, created by the blades in rotation and tilting of the vertical axis (Y), and also by varying to the negative the angle of the blades of the first frame, an amphibious mode is enabled, assisted in all cases by a pressurised air system for propulsion and manoeuvring,
c) a stabilisation system by electro-aerodynamic means, and landing gear,
d) **characterised in that** the fixed blades of the first upper frame are adjustable in their angle of attack by a plate geared to the axes of said blades and which is actuated by an adjuster selected from a centrifugal adjuster and an electric adjuster, provided at the top of the first conical frame; the retractable blades of the second frame being configured to move with two degrees of freedom and regulate their angle of attack as they are extended by the centrifugal force when being displaced along a guide with a ramp, and with a spring regaining its initial position integral with one of the axes of one of the degrees of freedom.

2. The MANNED LENTICULAR AERODYNE according to claim 1, wherein the first frame is arranged above the second frame.

3. The MANNED LENTICULAR AERODYNE according to claim 1, wherein the first frame is arranged below the second frame.

4. The MANNED LENTICULAR AERODYNE, according to claim 1, where the power plant consists of two engines simultaneously coupled to the transmission mechanism, a main engine configured to move the two axles in counter-rotation and another auxiliary engine (STBY).

5. The MANNED LENTICULAR AERODYNE, according to claim 1, where the power plant consists of two engines, each configured to independently move each of the axles in counter-rotation.

6. The MANNED LENTICULAR AERODYNE, according to claim 1, where the manoeuvrability and propulsion in all directions is regulated by acting on the tilting of the vertical axis (Y) of the drive axles by means of four nozzles of compressed pressurised air generated by a circular manifold-compressor concentric to said vertical axis, with accumulators, and whose compression blades are housed on the lower side of the bases of the frames.

7. The MANNED LENTICULAR AERODYNE, according to claim 6, where the four nozzles for manoeuvres and thrust are located on the periphery, and are adjustable in flow and position, through the actuation of cabin controls and pedals to move in level flight or tilting of the axis (Y).

8. The MANNED LENTICULAR AERODYNE, according to claim 1, which has an electro-aerodynamic stabilisation system integrated by an I.M.U. configured to regulate aerodynamic fins to compensate for the rotation of the frame, as well as diffusers to stabilise moments of tilting of the axis (Y) that propel air to compensate for them; both being fed by the downward current of the reaction of the fixed blades of the upper frame.

9. The MANNED LENTICULAR AERODYNE, according to claim 1, **characterised in that** both conical frames are stabilised in their rotation (RSM), either by rollers coupled to the periphery of their bases; by 120° reinforcing braces anchored at the ends of the drive axles and the frame or by a conical fairing secured on the same points.
